Europäisches Patentamt

European Patent Office

Office européen des brevets

(11) Veröffentlichungsnummer: **0 177 716**
**A1**

(19)

(12) **EUROPÄISCHE PATENTANMELDUNG**

(21) Anmeldenummer: 85110289.7

(22) Anmeldetag: 17.08.85

(51) Int. Cl.⁴: **C 03 B 5/20,** C 03 B 5/18, C 03 B 5/027

(30) Priorität: 06.10.84 DE 3436793

(43) Veröffentlichungstag der Anmeldung: 16.04.86 Patentblatt 86/16

(84) Benannte Vertragsstaaten: **AT BE CH DE FR GB IT LI NL SE**

(71) Anmelder: **Sorg GmbH & Co. KG, Im Aller 23 Postfach 520, D-8770 Lohr/Main (DE)**

(72) Erfinder: **Sorg, Helmut, Im Aller 23, D-8770 Lohr/Main (DE)**
Erfinder: **Pieper, Helmut, Buchenstrasse 19, D-8770 Lohr/Main (DE)**
Erfinder: **Knauer, Adolf, Ruppert-Hüttener-Strasse 71, D-8770 Lohr/Main (DE)**

(74) Vertreter: **Patentanwälte Schulze Horn und Hoffmeister, Goldstrasse 36, D-4400 Münster (DE)**

(54) **Glasschmelzofen mit Bodenelektroden.**

(57) Glasschmelzofen mit einer von oben durch Brenner beheizten Schmelzwanne, bestehend aus einem Schmelzteil (1) und einem mit Elektroden zur Zuführung von elektrischer Energie versehenen Läuter- und Homogenisierungsteil (2, 3), einem Wall (4), der den Schmelzteil (1) von dem Läuter- und Homogenisierungsteil (2, 3) trennt, und dessen Oberrand sich unterhalb der Schmelzbad-Oberfläche befindet, einem im Bodenbereich (6) des Läuter- und Homogenisierungsteils (2, 3) befindlichen Auslaß (11) für das Glas, wobei der Boden (6) des Läuter- und Homogenisierungsteils (3) tiefer liegt als der Boden des Schmelzteils (1) und die Elektroden (7) in einer oder mehreren Ebenen der Läuterzone (2) angeordnet sind, in der Ausgestaltung, daß läuterteilseitig (2) neben dem Wall (4) ein Bodenteil (5) vorhanden ist, das erheblich über dem Boden (6) des Homogenisierungsteils (3) liegt.

1

## Glasschmelzofen mit Bodenelektroden

Die Erfindung betrifft einen Glasschmelzofen mit einer von oben durch Brenner beheizten Schmelzwanne, bestehend aus einem Schmelzteil und einem mit Elektroden zur Zuführung von elektrischer Energie versehenem Läuter- und Homogenisierungsteil, einem Wall, der den Schmelzteil von dem Läuter- und Homogenisierungsteil trennt und dessen Oberrand sich unterhalb der Schmelzbad-Oberfläche befindet, einem im Bodenbereich des Läuter- und Homogenisierungsteils befindlichen Auslaß für das Glas, wobei der Boden des Läuter- und Homogenisierungsteils tiefer liegt als der Boden des Schmelzteils und die Elektroden in einer oder mehreren Ebenen der Läuterzone angeordnet sind.

Glasschmelzöfen dieser Art haben sich bewährt, da sie nicht nur flexibel einsetzbar sind, sondern da sie auch besonders hochwertiges Glas zu erschmelzen vermögen. Nachteilig ist bei ihnen allerdings, daß der das Schmelz- und Läuter- bzw. Homogenisierungsteil trennende Wall relativ aufwendig ist, da seine Steine tief in den Boden der Schmelzwanne eingesetzt werden müssen.

Weiterhin ist es bei den bekannten Öfen nachteilig, daß die in den Wänden eingesetzten Elektroden erheblich der Korrosion unterworfen sind und daß ein Aufheizen des Entnahmestromes in der Wannenmitte nur schwer durchführbar ist.

Aufgabe der Erfindung ist es daher, einen Glasschmelzofen zu schaffen, der bei Beibehaltung der Vorteile der bekannten Öfen mit kombinierter fossiler und elektrischer Beheizung die vorgenannten Nachteile vermeidet und der insbesondere wirtschaftlich herstellbar, leicht zu betreiben und zu regeln ist und der eine Verbesserung der Qualität des zu schmelzenden Glases ermöglicht.

Diese Aufgabe wird erfindungsgemäß bei dem eingangs genannten Glasschmelzofen dadurch gelöst, daß läuterseitig neben dem Wall ein Bodenteil vorhanden ist, das erheblich über dem Boden des Homogenisierungsteils liegt.

Vorteilhaft können in dem Bodenteil eine Anzahl von Bodenelektroden angeordnet sein, die eine Reihe bilden und in den Wänden des Läuter- und Homogenisierungsteils können weitere Elektroden eingesetzt sein, die eine Verbesserung des Läutervorganges ermöglichen.

Die Wandelektroden sind vorteilhaft nahe der Querwand des Ofens angeordnet und derart geschaltet, daß ein Stromfluß längs der Seitenwände sowie der Querwand erfolgt. Dadurch wird vermieden, daß kalte Glasströme wandnah absinken, ohne ausreichend dem erforderlichen Läuter- bzw. Homogenisierungsvorgang unterworfen zu sein.

Zur Vereinfachung der Herstellung des Walles kann dieser nach Art eines Staudammes einen zum Schmelzteil hin weisenden Vorsprung bilden, d.h. er kann vorteilhaft mit zum Schmelzteil hin weisender Spitze gepfeilt sein oder entsprechend gebogen sein. Der Boden kann dabei durch eine Anzahl von Knicken angenähert sein.

3

Der erfindungsgemäße Glasschmelzofen stellt für den
Fachmann überraschend eine weitere Verbesserung
der bekannten kombinierten fossil und elektrisch
beheizten Glasschmelzöfen dar und da er die Wirtschaftlichkeit weiterhin erhöht, kann von einer idealen
Lösung der anstehenden Probleme gesprochen werden.

Im folgenden wird ein Ausführungsbeispiel des erfindungsgemäßen Glasschmelzofens anhand von Zeichnungen
näher beschrieben. Es zeigen:
Figur 1 eine Teil-Aufsicht auf den erfindungsgemäßen
        Ofen mit dem Läuter- und Homogenisierungsteil
        und
Figur 2 einen Schnitt durch den Wallbereich des Ofens
        gemäß Figur 1.

Gemäß den Figuren besteht ein erfindungsgemäßer Ofen
aus einem Schmelzteil 1, bei welchem im nicht gezeigten
Teil die Gemengeauflage erfolgt und einem daran anschließenden Läuter- und Homogenisierungsteil 2 bzw. 3,
aus welchem das Glas über einen Auslaß 11 abgezogen
wird. Das Gemenge kann dabei auch noch die Oberfläche
des Läuterteils 2 bedecken.

Unterhalb des Läuterteils 2 ist das Homogenisierungsteil 3 angeordnet, in welchem keine Energie mehr
zugeführt wird und in welchem aufgrund der sich einstellenden Schichtung das Glas ohne Verwirbelung
absinkt und so mit gleichmäßiger Temperaturverteilung durch den Auslaß 11 abgezogen werden kann.

Zwischen dem Schmelzteil 1 und dem Läuterteil 2
ist ein Wall 4 angeordnet, der gemäß den Figuren leicht
gepfeilt ist und sich dadurch auf die Wandbereiche
abstützen kann. Es wird dadurch erreicht, daß dieser
Wall nicht stark im Boden verankert werden muß und
die Wallkonstruktion kann dadurch leichter und wirt-

4

schaftlicher werden, wobei die Festigkeit des Walles noch erhöht werden kann.

Statt der Pfeilung des Walles 4 kann dieser auch zum Schmelzteil 1 hin gewölbt bzw. gebogen sein, wobei diese Biegung auch durch eine Anzahl von Knicken ausgeführt werden kann. Erfindungswesentlich ist in diesem Zusammenhang, daß nach Art eines Staudammes oder Gewölbes ein Abstützen der verwendeten Steine an ihren Rändern erfolgt, so daß insgesamt eine wesentlich leichtere und mehr filigranhafte Konstruktion ermöglicht wird.

Läuterteilseitig ist neben dem Wall ein Bodenteil 5 vorgesehen, welches in etwa die gleiche Höhe wie der Boden des Schmelzteiles 1 aufweist und durch welches Bodenelektroden 7 in den Läuterteil 2 ragen.

Diese Bodenelektroden weisen den Vorteil auf, daß sie leicht zugänglich sind, geringere Korrosion als Wandelektroden besitzen und daß zwischen ihnen eine Energiezufuhr parallel zu dem Wall erfolgt, so daß auch kältere Mittenströmungen auf die notwendige Läutertemperatur gebracht werden können.

Durch die Bodenelektroden ist es möglich, den Haupt-Entnahmestrom nach Belieben aufzuheizen und dadurch kann die Schmelzkapazität einer Wanne im erheblichen Umfang gesteigert werden, ohne daß diese ein größeres Bauvolumen erfordert.

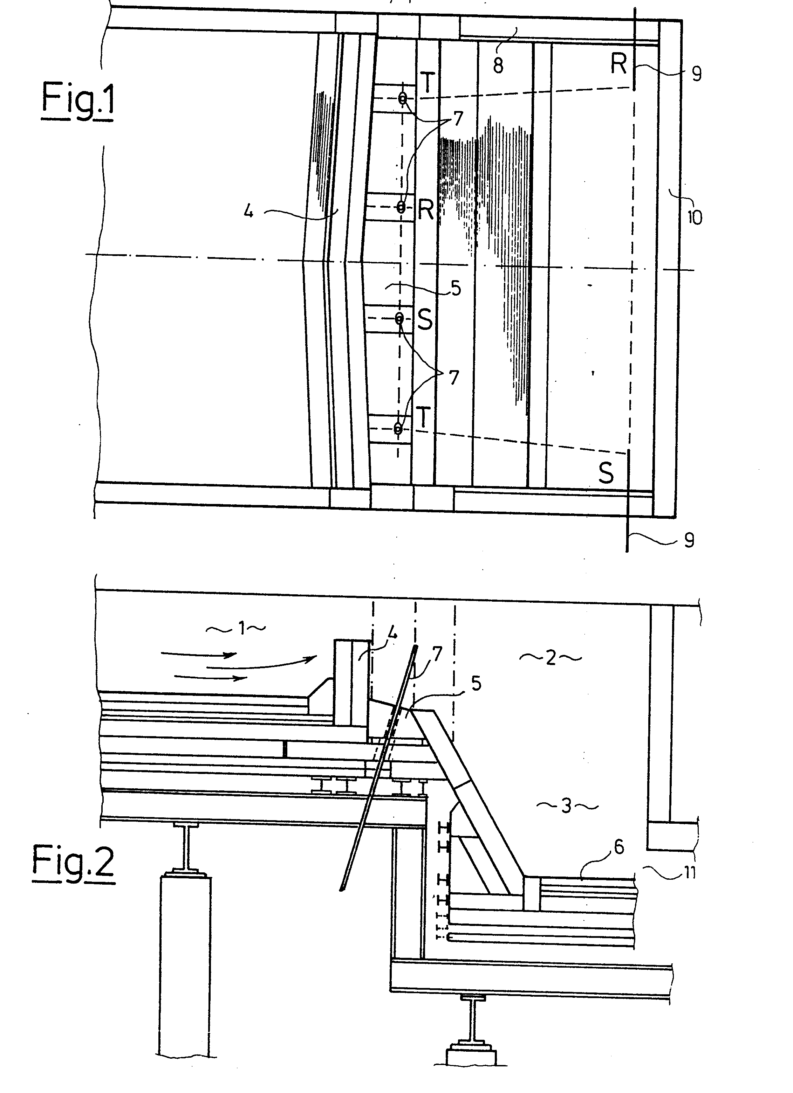

Die Läuterung im Läuterteil 2 wird weiterhin dadurch ermöglicht und verbessert, daß Wandelektroden 9 nahe der abschließenden Querwand 10 eingesetzt sind. Bei einer Schaltung gemäß Figur 1 ist es damit möglich, einen Stromfluß nicht nur entlang des Walles, sondern auch entlang der Seitenwände 8 sowie entlang der Querwand 10 einzustellen. Dadurch wird vermieden, daß die

5

kälteren Wände kalte, absinkende Strömungen erzeugen, die die Homogenität des Glases beeinträchtigen würden.

Die Schaltung der wallnahen Elektroden 7 ist derart, daß zwischen ihnen die Ströme auf dem kürzesten Weg fließen. Bei Verwendung eines Drehstromtransformators werden also die drei Phasen an nebeneinanderliegende Elektroden 7 angelegt. Ein weiterer Drehstromtransformator versorgt dann mindestens die seitlich angeordneten Elektroden 7 sowie die Wandelektroden 9, wobei auch hier der Stromfluß direkt zwischen den Elektroden erfolgt und damit gewährleistet ist, daß die Hauptenergiezuführung im Wandbereich besteht.

Hinsichtlich des Läuter- und Homogenisierungsvorganges erfolgt dieser, wie in der älteren Anmeldung des Anmelders P 27 03 223.1 beschrieben. Ein näheres Eingehen darauf kann also unterbleiben.

Durch die erfindungsgemäße Anordnung der Elektroden wird weiterhin ein direktes Aufheizen des Entnahmestroms bewirkt, wobei eine Vergleichmäßigung der abwärts gerichteten Entnahmeströmung eintritt. Über diesen Vorteil hinaus ermöglicht die erfindungsgemäße Ausgestaltung eines Glasschmelzofens eine freie Wahl der Badtiefen im Schmelz- bzw. Läuter- und Homogenisierungsteil und damit eine Anpassung der Glasschmelzöfen nach der Erfindung an die vorhandenen baulichen Gegebenheiten. Der erfindungsgemäße Ofen eignet sich daher besonders gut für den in regelmäßigen Abständen erforderlichen Neuaufbau der Glasschmelzöfen. Bei der erfindungsgemäßen Anordnung ist letztlich noch von besonderem Vorteil, daß die Bodenelektroden nicht nur weniger stark korrodieren als Wandelektroden, sondern auch leicht zugänglich sind und damit die Wartung, das Auswechseln und das Nachschieben erleichtert wird.

6

Erfindungsgemäß kann weiterhin der Wall relativ flach und schwellenartig ausgebildet sein, ohne daß für bestimmte Gläser seine Funktion beeinträchtigt würde. Die Verankerung dieser Schwelle ist gegenüber einem höheren Wall nochmals vereinfacht.

## Patentansprüche

1. Glasschmelzofen mit einer von oben durch Brenner beheizten Schmelzwanne, bestehend aus einem Schmelzteil und einem mit Elektroden zur Zuführung von elektrischer Energie versehenem Läuter- und Homogenisierungsteil, einem Wall, der den Schmelzteil von dem Läuter- und Homogenisierungsteil trennt und dessen Oberrand sich unterhalb der Schmelzbad-Oberfläche befindet, einem im Bodenbereich des Läuter- und Homogenisierungsteils befindlichen Auslaß für das Glas, wobei der Boden des Läuter- und Homogenisierungsteils tiefer liegt als der Boden des Schmelzteils und die Elektroden in einer oder mehreren Ebenen der Läuterzone angeordnet sind, dadurch gekennzeichnet, daß läuterteilseitig neben dem Wall (4) ein Bodenteil (5) vorhanden ist, das erheblich über dem Boden (6) des Homogenisierungsteils (3) liegt.

2. Glasschmelzofen nach Anspruch 1, dadurch gekennzeichnet, daß in dem Bodenteil (5) eine Anzahl von Bodenelektroden (7) angeordnet sind.

3. Glasschmelzofen nach Anspruch 2, dadurch gekennzeichnet, daß die Bodenelektroden (7) in einer Reihe längs des Walls (4) angeordnet sind.

4. Glasschmelzofen nach Anspruch 2 oder 3, dadurch gekennzeichnet, daß in den Wänden (8) des Läuter- und Homogenisierungsteils (2,3) weitere Elektroden (9) eingesetzt sind.

5. Glasschmelzofen nach Anspruch 5, dadurch gekennzeichnet, daß die Wandelektroden (9) nahe der Querwand (10) des Ofens angeordnet sind.

6. Glasschmelzofen nach Anspruch 4, gekennzeichnet durch eine Elektrodenschaltung derart, daß ein Stromfluß längs der Seitenwände (8) sowie der Querwand (10) erfolgt.

7. Glasschmelzofen nach einem der vorherigen Ansprüche, dadurch gekennzeichnet, daß der Wall (4) einen zum Schmelzteil (1) hin weisenden Vorsprung bildet.

8. Glasschmelzofen nach Anspruch 7, dadurch gekennzeichnet, daß der Wall mit einer zum Schmelzteil hin weisenden Spitze gepfeilt ist.

9. Glasschmelzofen nach Anspruch 7, dadurch gekennzeichnet, daß der Wall (4) gebogen ist.

10. Glasschmelzofen nach einem der vorhergehenden Ansprüche, dadurch gekennzeichnet, daß der Wall schwellenartig flach ausgebildet ist.

Fig.1

Fig.2

## EUROPÄISCHER RECHERCHENBERICHT

0177716
Nummer der Anmeldung

EP 85 11 0289

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,Y | US-A-1 944 855 (WADMAN)<br><br>* Figuren 2,3; Seite 3, Zeilen 12-92 * | 1,4,5, 10 | C 03 B 5/20<br>C 03 B 5/18<br>C 03 B 5/027 |
| Y | DE-A-2 539 355 (SORG)<br><br>* Insgesamt * | 1,2,3, 4,6,10 | |
| A | US-A-2 222 816 (KING)<br>* Figuren 1,2,3,5; Seite 2, Zeilen 7-17 * | 7,8 | |

RECHERCHIERTE SACHGEBIETE (Int. Cl.4)

C 03 B 5/00

Der vorliegende Recherchenbericht wurde für alle Patentansprüche erstellt.

| Recherchenort | Abschlußdatum der Recherche | Prüfer |
|---|---|---|
| DEN HAAG | 12-11-1985 | VAN DEN BOSSCHE W.L. |